# EUROPÄISCHE PATENTSCHRIFT

(11) **EP 2 867 739 B1**
(45) Veröffentlichungstag und Bekanntmachung des Hinweises auf die Patenterteilung: **12.04.2017**
(21) Anmeldenummer: 13739159.5
(22) Anmeldetag: 02.07.2013
(51) Int. Cl.: B60R 16/00, G05G 9/047, H01H 25/00, H01H 25/06

(54) **MULTIFUNKTIONS-BEDIENVORRICHTUNG, INSBESONDERE FÜR EINE KFZ-KOMPONENTE**
MULTIFUNCTION CONTROL DEVICE, NOTABLY FOR VEHICLE COMPONENTS
DISPOSITIF DE COMMANDE MULTIFONCTION NOTAMMENT POUR COMPONENTS DU VÉHICULE

(30) Priorität: 02.07.2012 DE 102012211437
(43) Veröffentlichungstag der Anmeldung: 06.05.2015
(73) Patentinhaber: Behr-Hella Thermocontrol GmbH, 70469 Stuttgart (DE)
(72) Erfinder: JANTKE, Markus, 59557 Lippstadt (DE)
(74) Vertreter: dompatent von Kreisler Selting Werner - Partnerschaft von Patent- und Rechtsanwälten mbB
(86) Internationale Anmeldenummer: PCT/EP2013/063925
(87) Internationale Veröffentlichungsnummer: WO 2014/006038

(56) Entgegenhaltungen:
- EP-A1- 1 139 365
- EP-A2- 0 796 766
- WO-A1-2012/085363

## Beschreibung

Die Erfindung betrifft eine Multifunktions-Bedienvorrichtung, und zwar insbesondere als Eingabeeinrichtung für bildschirmgesteuerte Vorrichtungen wie beispielsweise Computer, Vorrichtungen der Informations- oder Unterhaltungselektronik, Kfz-Komponenten oder allgemein für ein Mensch-Maschine-Interface.

Als Dateneingabeeinrichtungen insbesondere in Kraftfahrzeugen haben sich sogenannte Drehsteller bewährt, bei denen es sich um Multifunktions-Bedienvorrichtungen handelt, die eine manuell bedienbare Bedieneinheit, nämlich den Drehsteller, aufweisen, der bzw. die um eine Drehachse drehbar und längs der Drehachse rückstellfähig niederdrückbar sowie durch Kippen und/oder durch seitliches Verschieben im Wesentlichen radial zur Drehachse bewegbar ist. Sämtliche dieser Bedienfunktionen können an ein und demselben Element durchgeführt werden. Alternativ sind auch Systeme bekannt, bei denen die Verdrehung und das Niederdrücken durch ein erstes Element des Drehstellers realisiert werden, welches darüber hinaus auch noch ein seitliches Verschieben ermöglicht, wobei durch ein zusätzliches Element eine Art Joystick-Funktion, nämlich ein Kippen, realisiert werden kann.

Multifunktions-Bedienvorrichtungen der zuvor genannten Art haben sich grundsätzlich bewährt. Sie verfügen über einen Drehsensor zur Erfassung der aktuellen Drehposition der Bedieneinheit, einen Drücksensor zur Erfassung einer Niederdrückbewegung der Bedieneinheit und über eine Verschiebesensoreinheit zur Erkennung einer im Wesentlichen Radialbewegung der Bedieneinheit beim Kippen und/oder seitlichen Verschieben derselben. Derartige Multifunktions-Bedienvorrichtungen sind beispielsweise in WO-A-2005/027168, DE-A-100 59 793, DE-A-100 42 028, DE-A-101 20 691, DE-A-102 41 869 und DE-B-103 42 335, DE-T-601 01 972 und WO-A-2012/085363 beschrieben.

Des Weiteren ist in der EP-A-0 796 766 eine Multifunktionsbedienvorrichtung beschrieben, bei der bei Betätigung eines Bedienelements zeitgleich ein Verschiebeelement bewegt wird. Durch Auswertung der Position des Verschiebeelements kann anschließend ermittelt werden, in welcher Position sich das Bedienelement befindet.

Aufgabe der Erfindung ist es, eine möglichst einfache Konstruktion für eine Multifunktions-Bedienvorrichtung der vorstehend genannten Art anzugeben, bei der insbesondere auf Standardkomponenten zurückgegriffen werden kann, sofern es sich um die Drehbarkeit und Niederdrückbarkeit eines Drehstellers handelt.

Zur Lösung dieser Aufgabe wird mit der Erfindung eine Multifunktions-Bedienvorrichtung, insbesondere als Eingabeeinrichtung für bildschirmgesteuerte Vorrichtungen wie beispielsweise Computer, Vorrichtungen der Informations- oder Unterhaltungstechnik, Kfz-Komponenten oder allgemein für ein Mensch-Maschine-Interface vorgeschlagen, wobei die Multifunktions-Bedienvorrichtung versehen ist mit den Merkmalen des Anspruchs 1. Einzelne Ausgestaltungen der Erfindung sind Gegenstand der Unteransprüche.

Die erfindungsgemäße Multifunktions-Bedienvorrichtung nutzt zunächst einmal einen an sich bekannten, handelsüblichen Drehsteller mit dessen Funktionen, nämlich der Drehbarkeit und der Niederdrückbarkeit eines Drehbedienelements, das zumeist als Drehknopf-/ring o. dgl. ausgebildet ist. Die Drehbewegung derartiger Drehbedienelemente wird beispielsweise über (optisch arbeitende) Decoder detektiert, während beim Niederdrücken ein Schalter, Taster, (insbesondere berührungslos arbeitender) Sensor o. dgl. anspricht. Ein derartiger Dreh-/Drücksteller wird nun erfindungsgemäß mit einer getrennt vom Dreh-/Drücksteller ausgebildeten Verschiebesensoreinheit kombiniert. Hierbei ist die Bedieneinheit, also der Dreh-/Drücksteller, mechanisch mit einem Mitnehmerelement gekoppelt, das bei einer seitlichen Verschiebung der Bedieneinheit mitverschoben wird. Es wird also insbesondere die Bedieneinheit einschließlich der Sensorik für die Dreh- und Drückposition seitlich mitverschoben, was zur Mitnahme des Mitnehmerelements führt, das ebenfalls seitlich verschoben wird.

Erfindungsgemäß weist nun die Verschiebesensoreinheit zusätzlich zu dem Mitnehmerelement auch ein Kippelement auf, das eine winklig zur Radialebene und insbesondere parallel zur Drehachse der Bedieneinheit verlaufende Achse aufweist, die kippbar gelagert ist. Das Kippelement ist gelenkig mit dem Mitnehmerelement verbunden, was beispielsweise über ein Kugelgelenk oder ein Filmscharnier o. dgl. flexible Verbindung erfolgt, und stützt sich auf einem Stütz-(Kugelgelenk-)Lager ab, so dass das Kippelement entsprechend der in der Radialebene erfolgenden Verschiebungsrichtung und dem Ausmaß der Verschiebung der Bedieneinheit bzw. des Mitnehmerelements im Raum kippbar ist. Die Verschiebesensoreinheit der erfindungsgemäßen Multifunktions-Bedienvorrichtung weist darüber hinaus mindestens einen Sensor auf, der der Erfassung der jeweiligen Kippstellung des Kippelements bei einer seitlichen Verschiebung der Bedieneinheit dient.

Bei dem erfindungsgemäß vorgesehenen Kippelement handelt es sich um eine Art Taumelscheibe oder Taumelelement, das im Raum gekippt wird, und zwar in einer räumlichen Ausrichtung, die charakteristisch ist für die Richtung, in der die Bedieneinheit seitlich verschoben ist. Die seitliche Verschiebung der Bedieneinheit wird also in eine Kippbewegung des Kippelements übertragen. Das hierzu erforderliche Getriebe zwischen Bedieneinheit und Kippelement wird im Wesentlichen durch das Mitnehmerelement gebildet, das beispielsweise starr mit der Bedieneinheit gekoppelt sein kann und gelenkig mit dem Kippelement verbunden ist.

Diese räumliche Trennung von Verschiebesensoreinheit und Bedieneinheit ermöglicht es, die Verschiebesensoreinheit bzw. dessen Kippelement z. B. neben der Bedieneinheit anzuordnen. Dadurch entsteht eine insgesamt vergleichsweise flache Bauform, da nun die Verschiebesensoreinheit nicht mehr in den Dreh-/Drücksteller integriert werden muss. Bei einer vorteilhaften Ausgestaltung der Erfindung befindet sich also das Kippelement bzw. zumindest dessen Kippachse außerhalb der Drehachse der Bedieneinheit und deren Drehachsenverlängerung und ist somit neben der Bedieneinheit angeordnet.

Die taumelnde Bewegung, die das Kippelement bei seitlicher Verschiebung der Bedieneinheit vollführt, wird zweckmäßigerweise über mindestens zwei Sensorelemente der Verschiebesensoreinheit detektiert. Diese beiden Sensorelemente sind auf zwei Achsen angeordnet, die unter einem Winkel vom im Wesentlichen 90° verlaufen. Die Sensorelemente können als Endschalter oder Näherungssensoren ausgebildet sein und erfassen sozusagen ihren Abstand zum Kippelement oder zu einer Komponente des Kippelements oder einer Komponente der Verschiebesensoreinheit.

Zweckmäßig ist es, wenn die Verschiebesensoreinheit mindestens drei, vorzugweise vier, um im Wesentlichen gleiche Winkel zueinander versetzt angeordnete Sensorelemente zur Erfassung der Abstände des Kippelements oder mindestens einer Komponente des Kippelements oder der Verschiebesensoreinheit oder mindestens einer Komponente der Verschiebesensoreinheit zu den jeweiligen Sensorelementen aufweist.

Wie bereits oben erwähnt, ist der Sensor oder das bzw. jedes Sensorelement als Endschalter oder als berührungslos und/oder kapazitiv, magnetisch, resistiv oder optisch arbeitendes Element ausgebildet. Durch die versetzt angeordneten Sensoren lässt sich anhand der bekannten Positionen derjenigen Sensoren, die beim Kippen des Kippelements ansprechen, ermitteln, in welcher Kippstellung sich das Kippelement befindet. Werden beispielsweise vier jeweils 90° zueinander versetzte Sensorelemente verwendet, wird beim Ansprechen nur eines Sensorelements erkannt, dass das Kippelement in einer von vier um 90° zueinander versetzten Richtungen gekippt und damit die Bedieneinheit in einer von vier um 90° gegeneinander versetzten Richtungen seitlich verschoben ist, während dann, wenn zwei benachbarte Sensorelemente ansprechen, auch seitliche Verschiebungen der Bedieneinheit unter 45° zu den zuvor genannten Richtungen erkannt werden können.

In vorteilhafter weiterer Ausgestaltung der Erfindung kann vorgesehen sein, dass die Bedieneinheit ein äußeres erstes Bedienelement aufweist, das um die Drehachse der Bedieneinheit drehbar ist, und dass die Bedieneinheit ein inneres zweites Bedienelement aufweist, das von dem ersten Bedienelement umgeben und niederdrückbar ist. Hierbei ist es möglich, dass auch das erste Bedienelement niederdrückbar ist. Alternativ dazu ist auch denkbar, dass entweder das erste Bedienelement oder das zweite Bedienelement rückstellfähig niederdrückbar ist oder dass beide Bedienelemente gemeinsam rückstellfähig niederdrückbar sind.

Die Erfindung wird nachfolgend anhand eines Ausführungsbeispiels und unter Bezugnahme auf die Zeichnung näher erläutert. Im Einzelnen zeigen dabei:
- Fig. 1: eine perspektivische Darstellung eines Ausführungsbeispiels einer Multifunktions-Bedienvorrichtung nach der Erfindung,
- Fig. 2: eine Draufsicht auf die Bedienvorrichtung gemäß Fig. 1 mit Andeutung der Übertragung der seitlichen Verschiebung der Bedieneinheit in den acht Richtungen auf ein Verkippen des Kippelements im Raum in den acht Verschiebungsrichtungen entsprechenden Raumrichtungen,
- Fig. 3: eine Seitenansicht auf die Bedienvorrichtung in der Grundstellung der Bedieneinheit und
- Fig. 4: eine Seitenansicht auf die Bedienvorrichtung bei in der Zeichenebene der Fig. 4 seitlich verschobener Bedieneinheit.

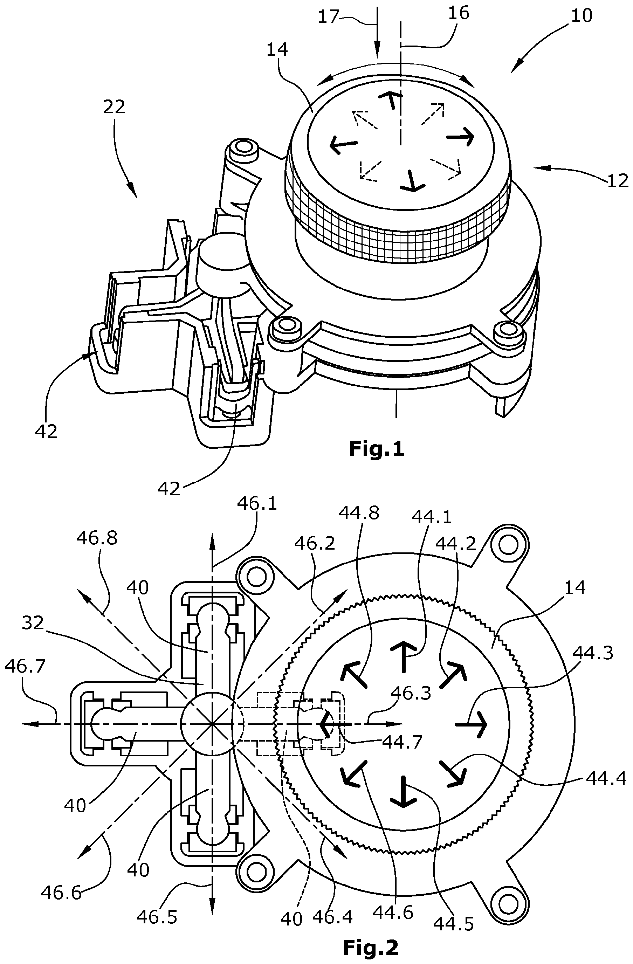

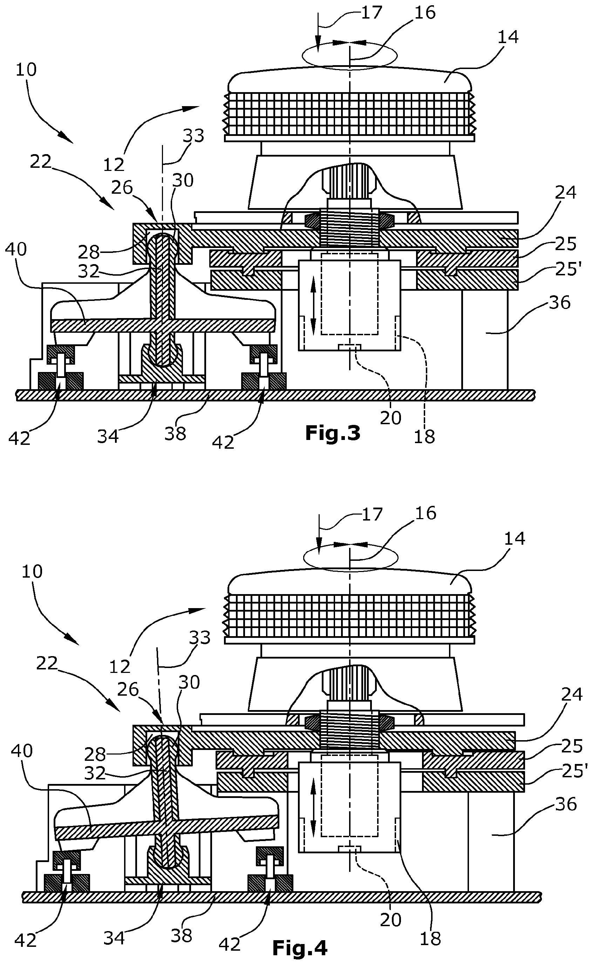

Fig. 1 zeigt perspektivisch ein Ausführungsbeispiel der Multifunktions-Bedienvorrichtung 10. Diese weist eine manuell bedienbare Bedieneinheit 12 auf, die ein Dreh-/Drückelement 14 in Form eines Drehknopfs umfasst. Das Dreh-/Drückelement 14 ist um eine Drehachse 16 drehbar und längs der Drehachse 16 in Richtung des Pfeils 17 rückstellfähig niederdrückbar. In Fig. 3 ist im unteren Gehäuse 18 des Dreh-/Drückelements 14 ein Drehsensor 19 zur Erfassung der aktuellen Drehposition des Dreh-/Drückelements 14 dargestellt. Ein Niederdrücken des Dreh-/Drückelements 14 wird mittels eines im Gehäuse 18 angeordneten (Nieder-)Drücksensors 20 (z. B. in Form eines Endschalters) erkannt.

Bei der Bedieneinheit 12 handelt es sich um eine im Wesentlichen Standard-Bedieneinheit mit Dreh- und Drückfunktion. Erfindungsgemäß wird nun eine derartige Bedieneinheit 12 verwendet, um ein seitliches Ziehen bzw. Verschieben des Dreh-/Drückelements 14 auf einfache Weise detektieren zu können. Hierzu weist die Multifunktions-Bedienvorrichtung 10 eine Verschiebesensoreinheit 22 auf, die ein Mitnehmerelement 24 in Form einer Platte umfasst, mit der die Bedieneinheit 12 bzw. das den Drehsensor 18 aufnehmende Gehäuse oder ein anderer Gehäuseteil der Bedieneinheit 12 vorzugsweise starr, insbesondere formschlüssig verbunden ist. Die starre Verbindung dient in diesem Fall dazu, dass eine seitliche Bewegung des Dreh-/Drückelements 14 zu einer seitlichen Verschiebung des Mitnehmerelements 24 führt. Dazu ist das plattenförmige Mitnehmerelement 24 linear an einer ersten Verschiebelagerplatte 25 geführt, die ihrerseits linear an einer zweiten Verschiebelagerplatte 25' geführt ist, was in beiden Fällen über in Fign. 1 und 2 angedeuteten Stegen erfolgt, die in Nuten geführt sind. Die beiden Linearführungen verlaufen rechtwinklig zueinander und sind mit Rückholfedern versehen, damit sich der Dreh-/Drücksteller 14 nach einer manuellen Bewegung und Loslassen wieder automatisch in seine zentrische Position gemäß fig. 1 zurückbewegt. Diese Art der Führung des Dreh-/Drückstellers 14 ist an sich bekannt.

Das Mitnehmerelement 24 weist ferner ein Gelenk 26 auf, das außerhalb der Bedieneinheit 12 angeordnet ist und eine Gelenkpfanne 28 eines Kugelgelenks umfasst. Von dieser Gelenkpfanne 28 ist der Kugelkopf 30 eines Kippelements 32 mit einer Kippachse 33 aufgenommen. Das Kippelement 32 selbst ist ebenfalls über ein Kugelgelenklager 34 kippbar gelagert, und zwar an einer die Bedieneinheit 12 tragenden Haltekonstruktion 36 auf einer Grundplatte 38, bei der es sich beispielsweise um eine Platine handeln kann.

Gemäß Fig. 2 weist das Kippelement 32 in diesem Ausführungsbeispiel vier nach Art eines Kreuzes angeordnete Arme 40 auf, deren Enden im Abstand zur Grundplatte 38 angeordnet sind. Zwischen den Enden und der Grundplatte 38 sind vier Sensorelemente 42 angeordnet, die eine Annäherung des ihnen jeweils zugeordneten Endes eines Arms 40 des Kippelements 32 detektieren. Dies kann berührungslos oder aber mit mechanischem Kontakt erfolgen.

Wie man anhand der Fign. 3 und 4 erkennen kann, wird eine seitliche Verschiebung der Bedieneinheit 12 in eine Kippbewegung des Kippelements 32 um dessen Kippachse 33 überführt. Anhand von Fig. 2 ist zu erkennen, dass eine seitliche Verschiebung des Dreh-/Drückelements 14 in jede der acht verschiedenen Richtungen 44.1 bis 44.8 in in verschiedene Richtungen im Raum gekippte Stellungen des Kippelements 32 überführt wird. In den acht Kipprichtungen des Kippelements 32 ist dieses in Richtung der Pfeile 46.1 bis 46.8 gekippt. In jede dieser Kipprichtungen spricht eines der Sensorelemente 42 bzw. ein anderes Paar von Sensorelementen 42 an. Durch diese Information und durch Kenntnis der Lage dieser Sensorelemente kann dann anhand der Sensorsignale ausgewertet werden, in welcher Richtung 44.1 bis 44.8 das Dreh-/Drückelement 14 seitlich verschoben worden ist.

### BEZUGSZEICHENLISTE

- 10: Multifunktions-Bedienvorrichtung, Bedienvorrichtung
- 12: Bedieneinheit
- 14: Dreh-/Drückelement
- 16: Drehachse
- 17: Pfeil
- 18: (Sensor)Gehäuse des Dreh-/Drückelements
- 19: Drehsensor
- 20: Drücksensor
- 22: Verschiebesensoreinheit
- 24: Mitnehmerelement
- 25: erste Verschiebelagerplatte
- 25': zweite Verschiebelagerplatte
- 26: Gelenk
- 28: Gelenkpfanne
- 30: Kugelkopf
- 32: Kippelement
- 33: Kippachse
- 34: Kugelgelenklager
- 36: Haltekonstruktion
- 38: Grundplatte
- 40: Arme, Arms
- 42: Sensorelement
- 44: Richtungen
- 46: Pfeile

## Patentansprüche

1. Multifunktions-Bedienvorrichtung, insbesondere als Eingabeeinrichtung für bildschirmgesteuerte Vorrichtungen wie beispielsweise Computer, Vorrichtungen der Informations- oder Unterhaltungstechnik, Kfz-Komponenten oder allgemein für ein Mensch-Maschine-Interface, mit
- einer manuell bedienbaren Bedieneinheit (12), die um eine Drehachse (16) drehbar und längst der Drehachse (16) rückstellfähig niederdrückbar sowie im Wesentlichen radial zur Drehachse (16) seitlich verschiebbar ist,
- wobei die Bedieneinheit (12) einen Drehsensor (19) zur Erfassung der aktuellen Drehposition und einen Drücksensor (20) zur Erfassung einer Niederdrückbewegung aufweist,
- einer Verschiebesensoreinheit (22) zur Richtungserkennung einer im Wesentlichen radialen Bewegung der Bedieneinheit (12) beim seitlichen Verschieben derselben und
- einer Verschiebesensoreinheit (22) mit einem in einer Radialebene verschiebbar geführten Mitnehmerelement (24), mit dem die Bedieneinheit (12) mechanisch gekoppelt ist und das beim Verschieben der Bedieneinheit (12) mitverschiebbar ist,
- wobei die Verschiebesensoreinheit (22) ein Kippelement (32) mit einer Kippachse (33) aufweist, das gelenkig mit dem Mitnehmerelement (24) verbunden und beim Verschieben des Mitnehmerelements (24) kippbar ist, und
- wobei die Verschiebesensoreinheit (22) ferner mindestens einen Sensor zur Erfassung der sich bei einer seitlichen Verschiebung der Bedieneinheit (12) ergebenden Kippstellung des Kippelements (32) aufweist,
**dadurch gekennzeichnet,**
- **dass** die Kippachse (33) des Kippelements (32) und/oder das Kippelement (32) außerhalb der Drehachse (16) der Bedieneinheit (12) und deren Drehachsenverlängerung sowie seitlich neben der Bedieneinheit (12) angeordnet ist.

2. Multifunktions-Bedienvorrichtung nach Anspruch 1, **dadurch gekennzeichnet, dass** das Kippelement (32) bei seitlicher Verschiebung der Bedieneinheit (12) taumelnd bewegbar ist.

3. Multifunktions-Bedienvorrichtung nach Anspruch 1 oder 2, **dadurch gekennzeichnet, dass** die Verschiebesensoreinheit (22) zwei Sensorelemente (42) aufweist, die auf sich unter einem Winkel von im Wesentlichen 90° erstreckenden Achsen angeordnet sind und die ihren jeweiligen Abstand zu dem Kippelement (32) oder einer Komponente des Kippelements (32) oder der Verschiebesensoreinheit (22) oder mindestens einer Komponente der Verschiebesensoreinheit (22) erfassen.

4. Multifunktions-Bedienvorrichtung nach Anspruch 1 oder 2, **dadurch gekennzeichnet, dass** die Verschiebesensoreinheit (22) mindestens drei, vorzugweise vier, um im Wesentlichen gleiche Winkel zueinander versetzt angeordnete Sensorelemente (42) zur Erfassung der Abstände des Kippelements (32) oder mindestens einer Komponente des Kippelements (32) oder der Verschiebesensoreinheit (22) oder mindestens einer Komponente der Verschiebesensoreinheit (22) zu den jeweiligen Sensorelementen (42) aufweist.

5. Multifunktions-Bedienvorrichtung nach einem der Ansprüche 1 bis 4, **dadurch gekennzeichnet, dass** der mindestens eine Sensor oder das mindestens eine Sensorelement (42) als Endschalter ausgebildet ist.

6. Multifunktions-Bedienvorrichtung nach einem der Ansprüche 1 bis 4, **dadurch gekennzeichnet, dass** der mindestens eine Sensor oder das mindestens eine Sensorelement (42) berührungslos und/oder kapazitiv, magnetisch, resistiv oder optisch arbeitet.

7. Multifunktions-Bedienvorrichtung nach einem der Ansprüche 1 bis 6, **dadurch gekennzeichnet, dass** die Bedieneinheit (12) ein äußeres erstes Bedienelement aufweist, das um die Drehachse (16) der Bedieneinheit (12) drehbar ist, und dass die Bedieneinheit (12) ein inneres zweites Bedienelement aufweist, das von dem ersten Bedienelement umgeben und niederdrückbar ist.

8. Multifunktions-Bedienvorrichtung nach Anspruch 7, **dadurch gekennzeichnet, dass** auch das erste Bedienelement niederdrückbar ist.

9. Multifunktions-Bedienvorrichtung nach Anspruch 7 oder 8, **dadurch gekennzeichnet, dass** entweder das erste Bedienelement oder das zweite Bedienelement rückstellfähig niederdrückbar ist oder dass beide Bedienelemente gemeinsam rückstellfähig niederdrückbar sind.

## Claims

1. A multifunction operating device, particularly as an input device for monitor-controlled devices such as computers, information or entertainment technology devices, vehicle components or generally for a man-machine interface, comprising
- a manually operable operating unit (12), which can be rotated about an axis of rotation (16), depressed along the axis of rotation (16) in a resilient manner, and laterally displaced in a substantially radial direction with respect to the axis of rotation (16),
- wherein the operating unit (12) has a rotary sensor (19) for sensing the current rotational position and a push sensor (20) for sensing a depression movement, and
- a displacement sensor unit (22) for sensing the direction of a substantially radial movement of the operating unit (12) during the lateral displacement of said unit, and
- a displacement sensor unit (22) having a driver element (24) which is displaceably guided in a radial plane and to which the operating unit (12) is mechanically coupled and which can be displaced along during the displacement of the operating unit (12),
- wherein the displacement sensor unit (22) has a tilting element (32), having a tilting axis (33) which is connected to the driver element (24) in an articulated manner and which can be tilted when the driver element (24) is displaced, and
- wherein the displacement sensor unit (22) also has at least one sensor for sensing the tilted position of the tilting element (32) during a lateral displacement of the operating unit (12),
**characterized in that**
- the tilting axis (33) of the tilting element (32) and/or the tilting element (32) are arranged outside the axis of rotation (16) of the operating unit (12) and the prolongation of the axis of rotation thereof, as well as laterally beside the operating unit (12).

2. The multifunction operating device of claim 1, **characterized in that** the tilting element (32) is adapted to be moved in a wobbling manner as the operating unit (12) is displaced laterally.

3. The multifunction operating device of claim 1 or 2, **characterized in that** the displacement sensor unit (22) has two sensor elements (42) that are arranged on axes extending under an angle of substantially 90° and detect their respective distance from the tilting element (32) or a component of the tilting element (32) or from the displacement sensor unit (22) or at least one component of the displacement sensor unit (22).

4. The multifunction operating device of claim 1 or 2, **characterized in that** the displacement sensor unit (22) comprises at least three, preferably four sensor elements (42) arranged under substantially equal angles with respect to each other, the sensor elements serving to detect the distances of the tilting element (32) or at least one component of the tilting element (32) or from the displacement sensor unit (22) or at least one component of the displacement sensor unit (22) to the respective sensor elements (42).

5. The multifunction operating device of one of claims 1 to 4, **characterized in that** the at least one sensor or the at least one sensor element (42) is configured as an end switch.

6. The multifunction operating device of one of claims 1 to 4, **characterized in that** the at least one sensor or the at least one sensor element (42) works in a contactless manner and/or capacitively, magnetically, resistively or optically.

7. The multifunction operating device of one of claims 1 to 6, **characterized in that** the operating unit (12) has an outer first operating element rotatable about the axis of rotation (16) of the operating unit (12), and that the operating unit (12) has an inner second operating element surrounded by the first operating element and adapted to be depressed.

8. The multifunction operating device of claim 7, **characterized in that** also the first operating element is depressible.

9. The multifunction operating element of claim 7 or 8, **characterized in that** either the first operating element or the second operating element is resiliently depressible, or that both operating elements can be resiliently depressed together.

## Revendications

1. Dispositif de commande multifonction, en particulier en tant qu'unité de saisie pour dispositifs commandés par écran, tels que ordinateurs, dispositifs de la technique d'information ou des loisirs, composants pour automobile ou, d'une façon générale, pour interface homme-machine, comprenant :
- une unité de commande (12) pouvant être actionnée manuellement, pouvant tourner autour d'un axe de rotation (16), être enfoncée contre une force de rappel le long de l'axe de rotation (16), et déplacée latéralement dans une direction sensiblement radiale par rapport à l'axe de rotation (16),
- où l'unité de commande (12) comporte un capteur de rotation (19) pour la détection de la position de rotation en cours et un capteur d'enfoncement (20) pour la détection d'un mouvement d'enfoncement,
- un ensemble capteur de déplacement (22) pour détecter la direction d'un mouvement sensiblement radial de l'unité de commande (12) lors du déplacement latéral de celle-ci, et
- un ensemble capteur de déplacement (22) doté d'un élément d'entraînement (24) guidé de manière à pouvoir être déplacé dans un plan radial, avec lequel l'unité de commande (12) est couplée mécaniquement et qui peut être déplacé en même temps que l'unité de commande (12),
- où l'ensemble capteur de déplacement (22) comporte un élément basculant (32) ayant un axe de basculement (33), qui est relié de manière articulée à l'élément d'entraînement (24) et peut basculer lors du déplacement de l'élément d'entraînement (24), et
- où l'ensemble capteur de déplacement (22) comporte en outre au moins un capteur de détection de la position de basculement que prend l'élément basculant (32) lors d'un déplacement latéral de l'unité de commande (12),
**caractérisé en ce que**
- l'axe de basculement (33) de l'élément basculant (32) et/ou l'élément basculant (32) est disposé à l'extérieur de l'axe de rotation (16) de l'unité de commande (12) et du prolongement de l'axe de rotation de celle-ci, de même que latéralement à côté de l'unité de commande (12).

2. Dispositif de commande multifonction selon la revendication 1, **caractérisé en ce que** l'élément basculant (32) est déplaçable de manière flottante lors du déplacement latéral de l'unité de commande (12).

3. Dispositif de commande multifonction selon la revendication 1 ou 2, **caractérisé en ce que** l'ensemble capteur de déplacement (22) présente deux éléments capteurs (42) qui sont disposés sur des axes s'étendant en formant un angle de sensiblement 90° et qui détectent leur distance respective par rapport à l'élément basculant (32) ou à un composant de l'élément basculant (32) ou à l'ensemble capteur de déplacement (22) ou à au moins à un composant de l'ensemble capteur de déplacement (22).

4. Dispositif de commande multifonction selon la revendication 1 ou 2, **caractérisé en ce que** l'ensemble capteur de déplacement (22) présente au moins trois, de préférence quatre, éléments capteurs (42) disposés en étant décalés mutuellement d'un angle sensiblement égal et destinés à détecter les distances de l'élément basculant (32) ou d'au moins un composant de l'élément basculant (32) ou de l'ensemble capteur de déplacement (22) ou d'au moins un composant de l'ensemble capteur de déplacement (22) par rapport aux éléments capteurs (42) respectifs.

5. Dispositif de commande multifonction selon l'une des revendications 1 à 4, **caractérisé en ce que** le capteur, au moins au nombre de un, ou l'élément capteur (42), au moins au nombre de un, est configuré en tant qu'interrupteur de fin de course.

6. Dispositif de commande multifonction selon l'une des revendications 1 à 4, **caractérisé en ce que** le capteur, au moins au nombre de un, ou l'élément capteur (42), au moins au nombre de un, fonctionne sans contact et/ou de manière capacitive, magnétique, résistive ou optique.

7. Dispositif de commande multifonction selon l'une des revendications 1 à 6, **caractérisé en ce que** l'unité de commande (12) présente un premier élément de commande extérieur qui peut tourner autour de l'axe de rotation (16) de l'unité de commande (12), et **en ce que** l'unité de commande (12) présente un second élément de commande intérieur qui est entouré du premier élément de commande et est apte à être enfoncé.

8. Dispositif de commande multifonction selon la revendication 7, **caractérisé en ce que** le premier élément de commande peut également être enfoncé.

9. Dispositif de commande multifonction selon la revendication 7 ou 8, **caractérisé en ce que** soit le premier élément de commande, soit le second élément de commande peut être enfoncé contre une force de rappel, ou **en ce que** les deux éléments de commande peuvent être enfoncés conjointement contre une force de rappel.
